# EUROPEAN PATENT APPLICATION

(11) **EP 1 238 617 A2**
(43) Date of publication of application: **11.09.2002**
(21) Application number: 02003228.0
(22) Date of filing: 20.02.2002
(51) Int. Cl.: A47J 42/04, A47J 42/38

(54) **Spice mill, salt mill and the like with means for preventing soiling of the supporting surface**

(30) Priority: 05.03.2001 IT MI010452
(71) Applicant: Girardini, Giancarlo, I-28019 Suno (Novara) (IT)
(72) Inventor: Girardini, Giancarlo, I-28019 Suno (Novara) (IT)
(74) Representative: Modiano, Guido, Dr.-Ing.

(57) **Abstract**

A spice mill, salt mill (1) and the like with means for preventing soiling of the supporting surface, comprising a body (2) which defines internally a cavity for accommodating a product to be ground, the cavity being closed in a downward region by a grinding assembly (3) which has a movable grinding element (5) connected to an actuation element that protrudes from the upper part of the cavity; the mill further comprises means (10) for movably closing the region below the movable grinding element which are controlled by the actuation of the grinding assembly (3).

## Description

The present invention relates to a spice mill, salt mill and the like with means for preventing soiling of the supporting surface.

It is known that utensils are currently available for grinding spices, particularly pepper, and for grinding granular products in general, which generally comprise a body having any shape which defines internally a cavity in which the product to be ground is placed.

The cavity is closed in a downward region by grinding elements which allow to break up the product by turning an actuation element connected to the movable grinding element.

These devices suffer the drawback that when the spice mill is placed on the table, additional ground particles inevitably escape, consequently soiling the table.

In order to try to overcome this drawback, spice or pepper mills have already been provided which are in practice placed upside down, i.e., have grinding elements arranged in their upper part, so that when the spice mill stands on the table the grinding elements are directed upwardly and there is no risk of soiling; in this embodiment it is, however, necessary to apply a closure plug in order to protect the grinding elements from dust, with a solution that is therefore scarcely accepted by users.

The aim of the invention is to eliminate the above noted drawbacks by providing a mill for spices, pepper, salt and granular products in general which is provided with means for preventing soiling of the supporting surface and allows to automatically achieve protection of the region where the grinding elements are provided, thus providing a product that is used in the conventional manner but has increased functionality.

Within this aim, an object of the invention is to provide a spice mill that can assume the conventional shapes of a spice mill while providing absolute protection against soiling and scattering of ground powders.

Another object of the present invention is to provide a spice mill that, thanks to its particular constructive characteristics, is capable of giving the greatest assurances of reliability and safety in use.

Another object of the present invention is to provide a spice mill with means for preventing the soiling of the supporting surface, that can be easily obtained starting from commonly commercially available elements and materials and is also competitive from a merely economical point of view.

This aim and these and other objects that will become better apparent hereinafter are achieved by a spice mill, salt mill and the like with means for preventing soiling of the supporting surface, comprising a body which defines internally a cavity for accommodating a product to be ground, said cavity being closed in a downward region by a grinding assembly which has a movable grinding element connected to an actuation element that protrudes from the upper part of said cavity, characterized in that it comprises means for movably closing the region below said movable grinding element, said means being controlled by the actuation of said grinding assembly.

Further characteristics and advantages of the present invention will become better apparent from the description of a preferred but not exclusive embodiment of a spice mill, salt mill and the like with means for preventing soiling of the supporting surface, illustrated only by way of non-limitative example in the accompanying drawings, wherein:
Figure 1 is a schematic view of a spice mill according to the invention;
Figure 2 is an exploded perspective view of the means for movably closing the region below the movable grinding element;
Figure 3 is a sectional view of the spice mill, taken in the lower part where the grinding assembly is located;
Figure 4 is a sectional view, taken along the line IV-IV of Figure 3, with the closure means in the closed position;
Figure 5 is a sectional view, taken along the line IV-IV of Figure 3, with the closure means in the open position.

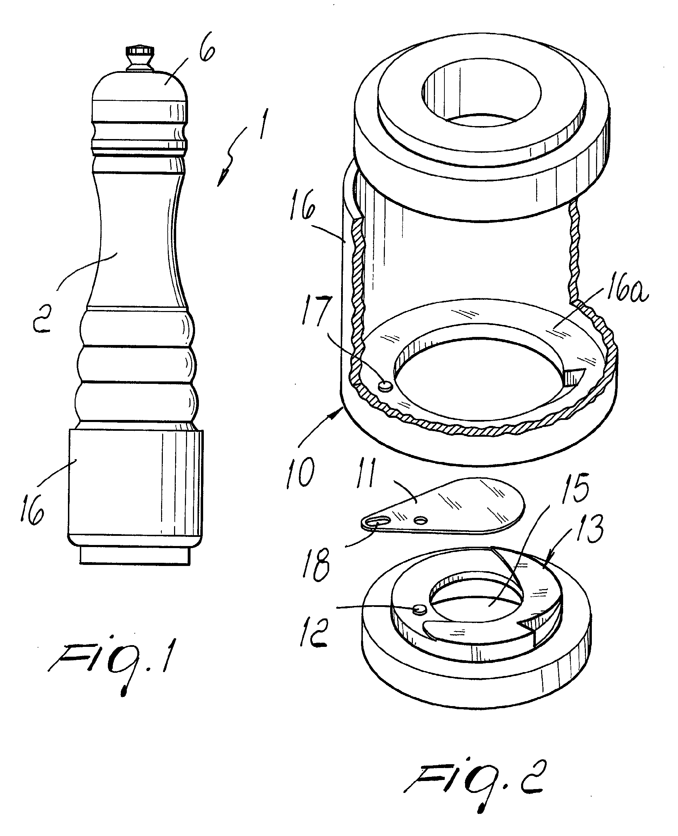

With reference to the figures, the spice mill, salt mill and the like with means for preventing soiling of the supporting surface, generally designated by the reference numeral 1, comprises a body 2 having any shape, which internally defines a cavity in which a product to be ground can be accommodated.

The cavity is closed in a downward region by a grinding assembly 3 which, in a manner known per se, has a fixed grinding element 4 rigidly coupled to the body 2 and a movable grinding element 5 which can rotate with respect to the grinding element 4, so as to grind the product in the desired manner.

The grinding assembly 3 can be advantageously made of steel, according to conventional methods, or optionally of ceramics with modern technologies.

The movable grinding element 5 is connected to an actuation element 6, which protrudes from the upper part of the cavity for containing the product and can be actuated in order to turn the movable grinding element 5 with respect to the fixed grinding element 4.

A feature of the invention consists in that movable closure means are provided, generally designated by the reference numeral 10, which allow to close, with respect to the outside, the region below the movable grinding element 5; the movable closure means 10 are controlled by the actuation of the grinding assembly and in particular by the rotation of the movable grinding element 5, and therefore the closure means remain closed in the inactive position but open automatically when the rotation of the movable grinding element with respect to the grinding element 5 is started.

The closure means 10 are constituted by a guillotine element 11, which by means of a pivot 12 is pivoted in a median portion to a block 13 which is connected to the lower part of the body 2 and forms an opening hole 15 through which the product ground by the grinding element 3 exits.

A cylindrical element 16 is provided so that it can rotate with respect to the block 13, lies at least partially above the body 2, and in practice forms a grip element.

The cylindrical element 16 is provided with an actuation pin 17, which engages in an elongated slot 18 provided at one end of the guillotine element 11.

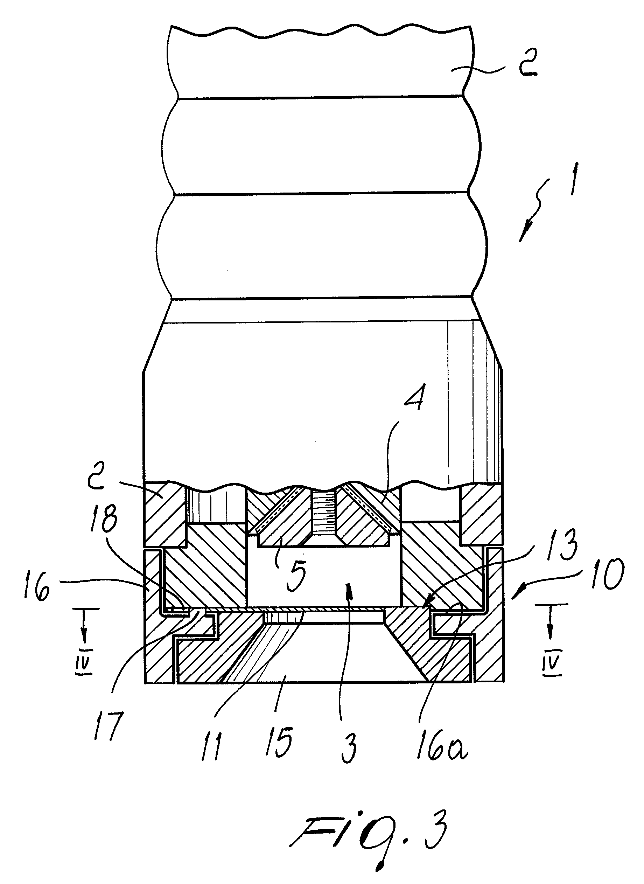

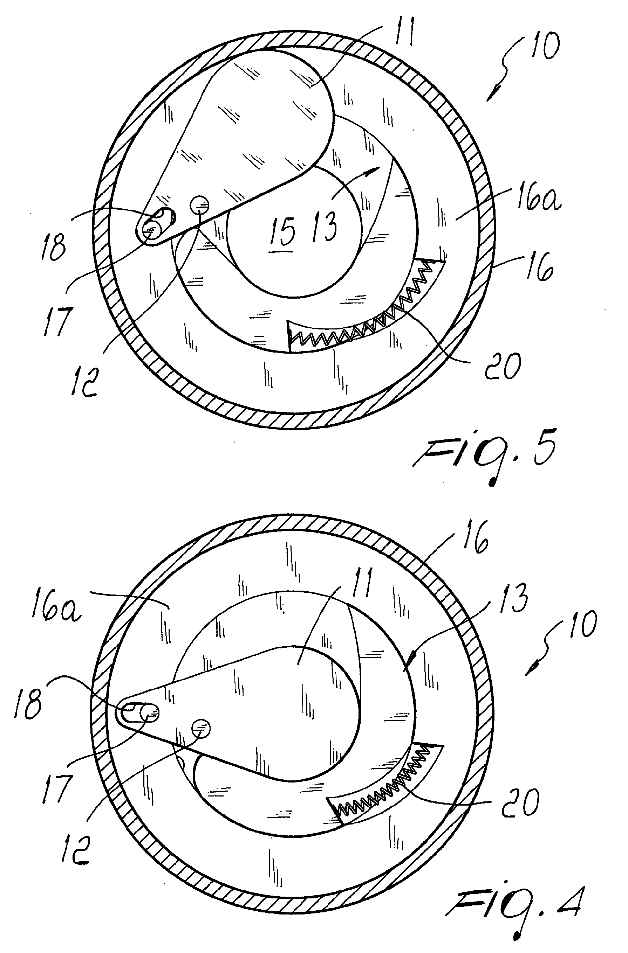

Elastic means are also provided, which are constituted by a helical spring 20 (see Figures 4 and 5) connected to the block 13 at one end and connected at the other end to a base flange 16a of the cylindrical element 16, so as to apply a return action which, by causing the rotation of the cylindrical element with respect to the block 13, causes the closure of the guillotine element 11.

With reference to Figure 4, the elastic means causes a mutual rotation between the cylindrical element 16 and the supporting block 13, such that the guillotine element is turned so as to close the opening 15.

During use of the spice mill, salt mill and the like, by holding the cylindrical element 16 and turning the movable grinding element 5, by means of the actuation element 6, in practice the body 2 is moved and therefore so is the block 13 rigidly coupled thereto, in contrast with the action of the spring 20.

The rotation between the cylindrical element 16 and the block 13 causes, as shown in Figure 5, an oscillation of the guillotine element 11, which is turned into the open position.

As soon as the action on the actuation element is interrupted, the spring 20 returns the guillotine element to the initial conditions, by way of the rotation of the cylindrical element 16 with respect to the block 13.

With the above described arrangement, it is therefore possible to provide a spice mill, salt mill and the like in which the region below the grinding elements is closed automatically, so that there is no possibility of soiling, and it is not necessary to perform particular operations but it is possible to automatically actuate the closure elements, using the pepper mill in the conventional manner.

The invention thus conceived is susceptible of numerous modifications and variations, all of which are within the scope of the appended claims.

All the details may further be replaced with other technically equivalent elements.

In practice, the materials used, as well as the contingent shapes and dimensions, may be any according to requirements.

The disclosures in Italian Patent Application No. MI2001A000452 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A spice mill, salt mill (1) and the like with means for preventing soiling of the supporting surface, comprising a body (2) which defines internally a cavity for accommodating the product to be ground, said cavity being closed in a downward region by a grinding assembly (3) which has a movable grinding element (5) connected to an actuation element (6) that protrudes from the upper part of said cavity, **characterized in that** it comprises means (10) for movably closing the region below said movable grinding element, said means being controlled by the actuation of said grinding assembly.

2. The spice mill, salt mill and the like according to claim 1, **characterized in that** said means (10) for movably closing the region below said movable grinding element comprise a guillotine element (11) which can oscillate about an axis that is parallel to the rotation axis of said movable grinding element (5).

3. The spice mill, salt mill and the like according to claim 2, **characterized in that** it comprises a pin (12) which can engage in a median portion of said guillotine element (11) and is supported by a block (13) which is rigidly connected to the lower part of said body (2) and forms an opening hole (15) for the exit of the ground product.

4. The spice mill, salt mill and the like according to claim 3, **characterized in that** it comprises a cylindrical element (16) for gripping said spice mill, said cylindrical element being connected to said block (13) so as to allow oscillation, an actuation pin (17) being provided on said cylindrical element (16) and being engageable in an elongated slot (18) provided in said guillotine element (11) in a point that is spaced from the region for engagement with said pin.

5. The spice mill, salt mill and the like according to one or more of the preceding claims, **characterized in that** it comprises elastic return means (20) which act between said block (13) and a base flange (16a) of said cylindrical element (16) in order to return said guillotine element (11) to the closed position.
